# EUROPÄISCHE PATENTANMELDUNG

(11) **EP 1 985 436 A1**
(43) Veröffentlichungstag der Anmeldung: **29.10.2008**
(21) Anmeldenummer: 07107128.6
(22) Anmeldetag: 27.04.2007
(51) Int. Cl.: B29C 73/22, B29D 30/00, B29D 30/16, B29D 30/30, B60C 19/12

(54) **Luftreifen mit Dichtmittelzwischenlage und Verfahren zu seiner Herstellung**

(71) Anmelder: Continental Aktiengesellschaft, 30165 Hannover (DE)
(72) Erfinder: Sostmann, Stefan, Dr., 30855 Langenhagen (DE); Paul, Ingo, 30659 Hannover (DE); Buschmann, Jürgen, 30938 Burgwedel (DE)

(57) **Zusammenfassung**

Die Erfindung betrifft einen Luftreifen, der aus mehreren Lagen aus Kautschukelastomeren und Festigkeitsträgern aufgebaut ist und eine selbsttätig abdichtende Dichtmittelzwischenlage aus einem formstabilen, viskoelastischen Gel aufweist, und ein Verfahren zur Herstellung eines solchen Reifens. Dem lag die Aufgabe zugrunde, einen Fahrzeugluftreifen mit einer verbesserten, beim Reifenbau integrierbaren Dichtmittelschicht so auszurüsten, dass ein selbsttätiges Abdichten von Beschädigungen, die von durchstechenden oder durchbohrenden Gegenständen verursacht wurden, erreicht und einen Luftverlust durch das Einstichloch sicher verhindert wird. Hierfür wird bei einem Luftreifen zwischen Innenschicht und Laufstreifen eine Dichtmittellage vorgesehen, die als vorgefertigte Schicht innerhalb des lageweisen Aufbaus eines Reifenrohlings aus Innenschicht, Karkasse, Seitenwänden, Gürtellagen und Laufstreifen eingebracht werden kann und vulkanisationsfest ist.

## Beschreibung

Die Erfindung betrifft einen Luftreifen, der aus mehreren Lagen aus Kautschukelastomeren und Festigkeitsträgern aufgebaut ist und eine selbsttätig abdichtende Dichtmittelzwischenlage aufweist, und ein Verfahren zur Herstellung eines solchen Reifens.

Dichtmittel für Reifen sind als solche im Stande der Technik bekannt. Zunächst war es lediglich möglich, Undichtigkeiten an gebrauchten Reifen abzudichten. Hierfür verwendete Reparaturkits enthielten meist Kautschuklösungen. Mittlerweile gibt es auch Ansätze, Fahrzeugluftreifen so auszurüsten, dass sie sich bei Durchstich-Beschädigung des Reifens selbst abdichtend verhalten. Für diese vorsorgende Ausrüstung von Reifen sind herkömmliche Mittel auf der Basis von Kautschuklösungen unbrauchbar. Vielmehr sind Mittel gefordert, die ihre abdichtenden Eigenschaften bei der Vulkanisation aufrechterhalten oder die ortsfest nachträglich in den vulkanisierten Reifen eingebracht werden können. Die Selbstabdichtung erfordert, dass das Mittel die Abdichteigenschaften lange Zeit aktiv behält, um im Bedarfsfall wirken zu können.

Bei der Entwicklung derartiger Reifendichtmittel müssen zwei gegenläufige Eigenschaften vereinbart werden: Das Dichtmittel muss im Betrieb dort verbleiben, wo es vermutlich später abdichten soll (Ortsfestigkeit) und es muss fließfähig genug sein um sich über einer Durchstichstelle luftdicht schließen zu können. Jede Dichtmittelschicht muss genügend Haftung zum Reifengummi besitzen, damit es im Gebrauch nicht zu Ablösungen kommt. Sofern die Schicht in einen neuen Reifen bei dessen Herstellung integriert werden soll, muss das Mittel zudem vulkanisationsfest sein.

Die US 6,837,287 B1 und die EP 1 533 108 A2 offenbaren schlauchlose Luftreifen mit eingebauter Dichtmittelschicht, die aus einer in den Reifenrohling (green tire) als Zwischenschicht eingelegten Dichtmittelvorläuferschicht während der Reifenvulkanisation durch gezielte teilweise Depolymerisation entsteht. Nachteilig an dieser Verfahrensweise ist, dass es nur sehr wenige Systeme gibt, die in einer Depolymerisationsreaktion die Dichtschicht während der Vulkanisation ausbilden können. Dabei scheint es erforderlich zu sein, angrenzend an die Dichtschicht spezielle Kautschuke vorzusehen, konkret sind Halobutylkautschuke angegeben. Die Reifenentwicklung ist demnach eingeschränkt. Ferner kann es sich ungünstig auswirken, dass quasi-flüssige Teile im Reifen erzeugt werden, die, wenn ihre Verteilung in der Schicht durch Spannungen und äußere Kräfte verändert wird, zu Unwuchten und damit verbunden TU-Problemen (tire uniformity) im Reifen führen können.

Die Aufgabe der Erfindung besteht daher darin, die Nachteile im Stand der Technik zu vermeiden und einen Fahrzeugluftreifen mit einer verbesserten, beim Reifenbau integrierbaren Dichtmittelschicht so auszurüsten, dass ein selbsttätiges Abdichten von Beschädigungen, die von durchstechenden oder durchbohrenden Gegenständen verursacht wurden, erreicht und einen Luftverlust durch das Einstichloch sicher verhindert wird.

Zur Lösung dieser Aufgabe stellt die Erfindung ein Verfahren zur Herstellung eines Luftreifens mit einer selbsttätig gegen durchstechende Gegenstände abdichtenden Dichtmittelzwischenlage zur Verfügung, bei welchem eine vorgefertigte gelförmige Dichtmittellage innerhalb des lageweisen Aufbaus eines Reifenrohlings aus Innenschicht, Karkasse, Seitenwänden, Gürtellagen und Laufstreifen eingebracht und der Reifen anschließend in üblicher Weise durch Vulkanisieren des Rohlings fertiggestellt wird.

Es wird dabei von einem Standard-Reifenbauverfahren für schlauchlose Fahrzeugreifen ausgegangen. Dabei werden die einzelnen Reifenbauteile in Lagen vorgefertigt. Dies erfolgt bei den reinen Kautschuklagen im Allgemeinen durch streifenförmiges oder profiliertes Extrudieren. Bei Lagen, die Festigkeitsträger, wie Gewebe oder Stahlcord enthalten, werden die Schichten kalandriert. Anschließend werden die vorgefertigten Lagen an einer Wickelmaschine zum Beispiel auf eine kollabierbare Trommel nacheinander von innen nach außen aufgebracht, beginnend mit der luftdichten Innenschicht (inner liner) über die Karkasse, die Seitenwände, die Gurtlagen bis zum außenliegenden, gegebenenfalls mehrschichtigen Laufstreifen. Der Reifenrohling (green tire) wird in einer Form, die in der Regel gleichzeitig das Profil ausbildet, unter Druck ca. 10 bis 15 Minuten vulkanisiert. Die Vulkanisationstemperaturen betragen je nach Kautschukmischung zwischen 130 und 200 °C.

Die Dichtmittelschicht kann grundsätzlich an verschiedenen Positionen innerhalb des Reifenaufbaus vorgesehen sein, beispielsweise kann die Dichtmittelschicht unmittelbar unter dem Laufstreifen liegen, um die dort ansetzende Beschädigung durch einen durchstechenden Gegenstand, beispielsweise einen Nagel, vollflächig abzudichten. Auch eine zusätzliche Dichtmittelschicht kann dort vorgesehen sein.

Vorzugsweise wird die gelförmige Dichtmittellage vor Aufbringen weiterer Reifenbauteile auf die Innenschicht aufgelegt. Hierdurch wird der Luftaustritt möglichst nahe an der Luftseite des Reifens abgedichtet und damit verhindert.

In besonders bevorzugter Ausführungsform wird die Dichtmittellage unmittelbar auf die Innenschicht aufgelegt, alternativ kann zwischen Innenschicht und Dichtmittellage beispielsweise ein Haftmittel aufgebracht werden.

Die vorgefertigte Dichtmittellage ist in einem bevorzugten Ausführungsbeispiel streifenförmig. Geeignete Gele sind im Handel und schichtförmig erhältlich. Die Streifenlänge kann dem Umfang an der gewünschten Zwischenlageposition entsprechen, so dass die Streifenenden sich nach Auflegen der Schicht innerhalb des Reifenaufbaus auf Stoß treffen. Es kann auch ein dünnerer Streifen mehrfach gewickelt werden. Die Streifenbreite entspricht vorzugsweise der Laufstreifenbreite, da speziell dieser Bereich gegen Durchsteckverletzungen am Reifen mit anschließendem Luftverlust geschützt werden soll.

Die Dichtmittellage besteht aus einem formstabilen und viskoelastischen Gel. Definitionsgemäß besteht ein Gel aus einer sogenannten Matrix, die ein grobmaschig vernetztes Elastomer sein kann, und einem die Matrix ausfüllenden Dispersionsmittel, auch als Extender-Fluid bezeichnet. Das selbst fließfähige Fluid ist innerhalb der Matrix durch Haupt- oder Nebenvalenzkräfte gebunden und wird so "festgehalten", was dem Gel seine typischen mechanischen Eigenschaften verleiht. Die wesentlichen Eigenschaften, die ein Gel als Dichtmittel im Rahmen dieser Erfindung geeignet machen, sind Ortsfestigkeit bzw. Formstabilität - es darf kein stetiges Fließen, d.h. keine Migration oder Diffusion in andere Reifenbauteile stattfinden, das Dichtmittel soll an seinem Einsatzort verbleiben - und begrenzte Fließfähigkeit durch Viskoelastizität - durch Schnitte oder Stiche beschädigte Stellen im Gummi sollen selbsttätig geschlossen, d.h. abgedichtet, werden. Das viskoelastische Gel muss weiterhin unter Vulkanisationsbedingungen, also bei Temperaturen bis ca. 200 °C chemisch stabil sein und darf durch zwischenzeitliches Erhitzen seine Geleigenschaften nicht verlieren. Diese Forderungen werden von viskoelastischen Gelen erfüllt, die als solche bereits bekannt und für vielerlei Zwecke im Einsatz sind.

Viskoelastische Gele können eindringenden Fremdkörpern, z.B. Nägeln, ausweichen und sich nach deren Entfernung selbsttätig wieder verschließen. Sie sind daher als Dichtmittel oder als Komponente in Dichtmitteln für selbstdichtende Fahrzeugreifen sehr gut geeignet. Da sie sehr kohärent und zum Teil klebrig sind, füllen sie trotz grundsätzlicher Formstabilität kleine Hohlräume, Risse, Schnitte und dergleichen schnell aus.

Vorzugsweise wird für die Dichtmittellage ein Gel aus der Gruppe der Polyurethangele und der Silikongele gewählt.

Geeignete Silikongele bestehen beispielsweise aus einem weichen vernetzten Silikonelastomer, das mit einem nicht reaktiven Silikonöl als Extenderfluid gefüllt ist. Silikongele sind unter anderem in folgenden Patenten beschrieben: US 4,600,261, US 4,634,207, US 5,140,746, US 5,357,057, US 5,079,300, US 4,777,063, US 5,257,058, US 3,020,240. Siikongele werden im Stand der Technik häufig zum Einbetten elektrischer Komponenten oder als Druckausgleichsmaterialien (shock absorber) verwendet.

Vorzugsweise ist vorgesehen, dass die Dichtmittellage ein Polyurethangel aufweist.
Aus der EP 57838 und der EP 511570 sind spezielle für die Dichtmittellagen dieser Erfindung gut geeignete PU-Gele bekannt, bei denen ein Teil des Polyols als Dispersionsmittel für das durch Reaktion mit dem Isocyanat gebildete, vernetzte Polyurethan dient. Die Gele sind dadurch charakterisiert, dass die Isocyanatkennzahl des Reaktionsgemisches zwischen 15 und 80 liegt.

Unter der Isocyanatkennzahl wird das Äquivalentverhältnis (NCO/OH) x 100 verstanden. Eine Isocyanatkennzahl von 15 bedeutet demnach, dass auf eine reaktive OH-Gruppe in der Polyolkomponente 0,15 reaktive NCO-Gruppen in der Isocyanat oder auf eine reaktive NCO-Gruppe im Isocyanat 6,67 reaktive OH-Gruppen im Polyol vorliegen. Eine Isocyanatkennzahl von 80 bedeutet demnach, dass auf eine reaktive OH-Gruppe im Polyol 0,8 reaktive NCO-Gruppen kommen. Das Polyol liegt demnach im stöchiometrischen Überschuss vor und bildet das Geldispersionsmittel.

Die Gele werden in Platten entsprechender Größe vorgefertigt und sind im Handel erhältlich. Dadurch kann die Dichtschicht im normalen Reifenbau verarbeitet werden und muss nicht in einem zusätzlichen Arbeitsschritt nach der Vulkanisation eingebracht werden. Hierdurch ergeben sich wesentliche produktionstechnische Vorteile.

Die Erfindung umfasst auch einen Luftreifen, der aus mehreren Lagen von Kautschukelastomer und Festigkeitsträgern aufgebaut ist und eine als Zwischenlage zwischen Innenschicht und Laufstreifen angeordnete selbsttätig abdichtende Dichtmittellage aus einem grundsätzlich formstabilen, d.h. einem langsam reversibel in seine Form zurückkehrenden, viskoelastischen Gel enthält.

### Beispiele

Für die Dichtmittelschicht wurde ein Polyurethangel der Fa. Technogel® verwendet, das in 2 mm starken Platten zur Verfügung stand.

### 1. Das Polyurethangel besaß folgende Spezifikationen:

trifunktionelles Polyol mit einer OH-Zahl von 36;
HDI basiertes Isocyanat mit einem NCO-Gehalt von etwa 12 % (Desmodur E 305);
Polyol zu Isocyanat 10:1;
wismuthorganischer Katalysator (Coscat 83)
vorzugsweise gefüllt mit 10 bis 30 Gew.-% eines Pflanzenöls.

Aus diesem Material wurden Streifen für die Dichtmittellage zugeschnitten.

### 2. Vulkanisation am Prüfkörper:

Das Polyurethangel wurde zwischen zwei Schichten Standardreifenmischung (NR-Kautschuk-basiert, rußverstärkt, schwefelvernetzt) gelegt (alle drei Schichten in einer Dicke von 2 mm) und in einer Standard-Heizpresse 15 min bei 160 °C und hohem Druck geheizt. Anschließend wurde subjektiv die Adhäsion zwischen PU-Gel und Gummi bewertet und nach Präparation von S3-Stäben aus der geheizten Polyurethangel-Schicht wurden Zugversuche durchgeführt. Dabei konnte keine Veränderung des Polyurethangelmaterials durch den Heizzyklus erkannt werden. Das Material und damit auch die Dichtwirkung wird durch den Vulkanisationszyklus nicht verändert.

### 3. Prüfung am Reifen:

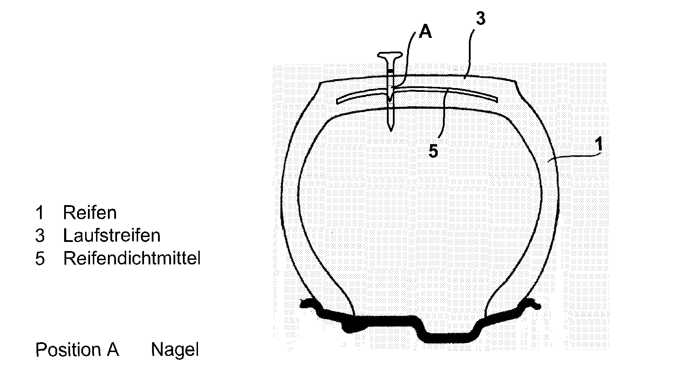

Im Folgenden wir die Erfindung anhand einer Abbildung näher veranschaulicht. Die Abbildung zeigt einen Luftreifen im Querschnitt, der mit einem Reifendichtmittel ausgerüstet ist und im Bereich der Lauffläche von einem Nagel durchstoßen ist.

### Bezugszeichen:

- 1: Reifen
- 3: Laufstreifen
- 5: Reifendichtmittel
- A: Nagel

Der Reifen 1 besitzt einen Laufstreifen 3 mit einer diesem Laufstreifen 3 unterlegten Schicht des Reifendichtmittels 5. An einer Position A durchstößt ein Nagel sowohl den Laufstreifen als auch die darunter liegende Dichtmittelschicht und dringt bis ins Reifeninnere ein. Bei Herausziehen des Nagels wird die entstehende Undichtigkeit zuverlässig abgedichtet, d.h. der Luftverlust kann sehr lange unterdrückt werden - auch unter gewisser Belastung.

### 3.1. Reifen ohne Dichtmittel (Vergleichsbeispiel)

Ein Reifen ohne Dichtmittel wurde auf eine Felge montiert und mit 2,5 bar Luftdruck befüllt. Anschließend wurden insgesamt 6 Nägel in den Reifen getrieben (2 Nägel mit 3,5 mm, 2 Nägel mit 4,2 mm und 2 Nägel mit 5,5 mm Durchmesser) und zwar so, dass jeder Nagel den Reifen komplett durchstieß und in den Innenraum ragte. Nach 24 Stunden war die Luft komplett aus dem Reifen entwichen.

Derselbe Reifen wurde anschließend wieder mit 2,5 bar Luftdruck befüllt und alle 6 Nägel wurden aus dem Reifen gezogen. Nach 2 Minuten war die Luft komplett aus dem Reifen entwichen.

### 3.2. Reifen mit Dichtmittel

Ein mit der Dichtmittelschicht versehener, mit entsprechenden Nägeln durchstochener Reifen hält die Luft noch ca 1 Woche, wenn die Nägel nicht entfernt werden.

Auch nach Herausziehen der Nägel bleibt der Reifen noch wenigstens eine weitere Woche dicht und verliert keine Luft. Der Reifen kann mit verringerter Geschwindigkeit in diesem Zustand mehrere Tage gefahren werden, ohne nennenswert Luft zu verlieren.

## Patentansprüche

1. Verfahren zur Herstellung eines Luftreifens mit einer selbsttätig abdichtenden Dichtmittelzwischenlage, **dadurch gekennzeichnet, dass** eine vorgefertigte gelförmige Dichtmittellage innerhalb des lageweisen Aufbaus eines Reifenrohlings aus Innenschicht, Karkasse, Seitenwänden, Gürtellagen und Laufstreifen eingebracht und der Reifen anschließend in üblicher Weise durch Vulkanisieren des Rohlings fertiggestellt wird.

2. Verfahren nach Anspruch 1, **dadurch gekennzeichnet, dass** die Dichtmittellage vor Aufbringen weiterer Reifenbauteile auf die Innenschicht aufgelegt wird.

3. Verfahren nach Anspruch 2, **dadurch gekennzeichnet, dass** die Dichtmittellage unmittelbar auf die Innenschicht aufgelegt wird.

4. Verfahren nach einem der Ansprüche 1 bis 3, **dadurch gekennzeichnet, dass** die vorgefertigte Dichtmittellage streifenförmig ist und die Streifenlänge dem Umfang an der Zwischenlageposition entspricht.

5. Verfahren nach einem der Ansprüche 1 bis 4, **dadurch gekennzeichnet, dass** die vorgefertigte Dichtmittellage streifenförmig ist und die Streifenbreite im Wesentlichen der Laufstreifenbreite entspricht.

6. Verfahren nach einem der Ansprüche 1 bis 5, **dadurch gekennzeichnet, dass** die Dichtmittellage aus einem formstabilen und viskoelastischen Gel besteht und vorzugsweise ausgewählt ist aus der Gruppe der Polyurethangele und der Silikongele.

7. Luftreifen, der aus mehreren Lagen von Kautschukelastomer und Festigkeitsträgern aufgebaut ist, gekenzeichnet durch eine als Zwischenlage zwischen Innenschicht und Laufstreifen angeordnete selbsttätig abdichtende Dichtmittellage aus einem formstabilen und viskoelastischen Gel.

8. Luftreifen nach Anspruch 7, **dadurch gekennzeichnet, dass** die Dichtmittellage radial auswärts unmittelbar auf der Innenschicht aufliegt.

9. Luftreifen nach Anspruch 7 oder 8, **dadurch gekennzeichnet, dass** die Dichtmittellage aus einem formstabilen und viskoelastischen Polyurethangel besteht.

10. Luftreifen nach Anspruch 7 oder 8, **dadurch gekennzeichnet, dass** die Dichtmittellage aus einem formstabilen und viskoelastischen Silikongel besteht.
